(19) **Europäisches Patentamt European Patent Office Office européen des brevets**

(11) **EP 4 419 403 B1**

(12) **FASCICULE DE BREVET EUROPEEN**

(45) Date de publication et mention de la délivrance du brevet:
**08.04.2026 Bulletin 2026/15**

(21) Numéro de dépôt: **22789263.5**

(22) Date de dépôt: **14.09.2022**

(51) Classification Internationale des Brevets (IPC):
**B60W 30/16** *(2020.01)*

(52) Classification Coopérative des Brevets (CPC):
**B60W 30/16;** B60K 2310/28; B60W 2540/20;
B60W 2554/802; B60W 2554/804

(86) Numéro de dépôt international:
**PCT/FR2022/051723**

(87) Numéro de publication internationale:
**WO 2023/067257 (27.04.2023 Gazette 2023/17)**

(54) **PROCÉDÉ ET DISPOSITIF DE CONTRÔLE D'UN SYSTEME DE RÉGULATION ADAPTATIVE DE VITESSE D'UN VÉHICULE**

VERFAHREN UND VORRICHTUNG ZUR STEUERUNG EINES ADAPTIVEN GESCHWINDIGKEITSREGELSYSTEMS EINES FAHRZEUGS

METHOD AND DEVICE FOR CONTROLLING AN ADAPTIVE CRUISE CONTROL SYSTEM OF A VEHICLE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **21.10.2021 FR 2111168**

(43) Date de publication de la demande:
**28.08.2024 Bulletin 2024/35**

(73) Titulaire: **Stellantis Auto SAS**
**78300 Poissy (FR)**

(72) Inventeurs:
• **VIVET, Luc**
**75016 Paris 16 (FR)**

• **TOUIL, Lhassane**
**Kenitra, 14000 (MA)**
• **BAALLAL, Mouad**
**92350 Le Plessis Robinson (FR)**

(74) Mandataire: **ESIP**
**Stellantis Auto SAS**
**Service REIP - YT800**
**43, rue Jean Pierre Timbaud**
**78300 Poissy (FR)**

(56) Documents cités:
**DE-A1- 102009 006 747    DE-A1- 102015 214 573**

## Description

La présente invention revendique la priorité de la demande française 2111168 déposée le 21.10.2021.

## Domaine technique

La présente invention concerne les procédés et dispositifs de contrôle d'un système de régulation adaptative de vitesse d'un véhicule, notamment un véhicule automobile. La présente invention concerne également un procédé et un dispositif de régulation de vitesse d'un véhicule. La présente invention concerne également un procédé et un dispositif de contrôle d'un véhicule, notamment un véhicule autonome.

## Arrière-plan technologique

Certains véhicules contemporains sont équipés de fonctions ou système(s) ou d'aide à la conduite, dit ADAS (de l'anglais « Advanced Driver-Assistance System » ou en français « Système d'aide à la conduite avancé »).

Parmi ces systèmes, le système de régulation adaptative de vitesse, dit ACC (de l'anglais « Adaptive Cruise Control ») a pour fonction première la régulation automatiquement, de façon adaptative, de la vitesse des véhicules qui en sont équipés en fonction de leur environnement. Un tel système ACC détermine une ou plusieurs consignes d'accélération en fonction d'une consigne de vitesse et d'informations relatives à l'environnement du véhicule, la ou les consignes d'accélération étant propres à réguler la vitesse du véhicule de façon adaptative, c'est-à-dire en tenant compte de l'environnement du véhicule.

Ces informations d'environnement correspondent par exemple à la distance entre le véhicule équipé du système ACC et un véhicule circulant devant, à la vitesse (par exemple relative) du véhicule circulant devant, à l'accélération du véhicule circulant devant et/ou à une vitesse limite réglementaire. La ou les consignes d'accélération sont par exemple déterminées à partir d'une loi de commande basée sur des estimations du couple fourni par un groupe motopropulseur (par exemple un moteur thermique ou électrique) à une ou plusieurs roues du véhicule et de l'accélération courante du véhicule.

Les informations d'environnement d'un véhicule sont par exemple obtenues de capteurs embarqués dans le véhicule, tels que des radars par exemple. Ces informations sont particulièrement importantes pour un véhicule, par exemple pour améliorer la sécurité du véhicule en prenant en compte l'environnement qui l'entoure, notamment les autres véhicules.

Le confort des passagers d'un véhicule est un autre facteur important, notamment pour l'acceptation des systèmes d'aide à la conduite des véhicules. Par exemple, une accélération ou une décélération trop importante est une cause d'inconfort pour les passagers d'un véhicule, notamment lorsque l'accélération est contrôlée par un système ACC. Le compromis entre le confort et la sécurité des passagers est parfois difficile à trouver.

Il est fait référence au document DE 10 2015 214573 A1 de l'art antérieur.

## Résumé de la présente invention

Un objet de la présente invention est de résoudre au moins l'un des problèmes de l'arrière-plan technologique décrit précédemment.

Un autre objet de la présente invention est d'améliorer le fonctionnement d'un système ACC d'un véhicule.

Selon un premier aspect, la présente invention concerne un procédé de contrôle d'un système de régulation adaptative de vitesse, dit système ACC, d'un premier véhicule, le procédé comprenant les étapes suivantes :

- détection d'un déclenchement d'au moins un clignotant du premier véhicule ;
- détermination d'un indicateur de pertinence d'un deuxième véhicule correspondant à un véhicule cible du système ACC à la détection du déclenchement du au moins un clignotant en fonction d'un temps inter-véhicules courant entre le premier véhicule et le deuxième véhicule ;
- contrôle du système ACC en fonction de l'indicateur de pertinence.

Selon une variante, l'indicateur de pertinence prend une valeur minimale déterminée pour une valeur maximale déterminée du temps inter-véhicules courant et l'indicateur de pertinence prend une valeur maximale déterminée pour une valeur minimale déterminée du temps inter-véhicules courant.

Selon une autre variante, la valeur minimale déterminée de l'indicateur de pertinence est égale à 0.5, la valeur maximale déterminée du temps inter-véhicules courant est égale à 6 s, la valeur maximale déterminée de l'indicateur de pertinence est égale à 1 et la valeur minimale déterminée du temps inter-véhicules courant est égale à 3 s.

Selon l'invention, le contrôle du système ACC comprend un ajustement d'une valeur de temps inter-véhicules de consigne en fonction de l'indicateur de pertinence.

Selon l'invention, l'ajustement de la valeur de temps inter-véhicules de consigne est obtenu en déterminant une vitesse ajustée du deuxième véhicule, la vitesse ajustée étant déterminée en fonction d'une vitesse courante du deuxième véhicule et d'une différence entre une vitesse de consigne du système ACC et la vitesse courante, la différence étant pondérée d'un coefficient de pondération fonction de l'indicateur de pertinence.

Selon une variante additionnelle, l'indicateur de pertinence étant compris entre 0 et 1, le coefficient de pondération étant compris entre 0 et une valeur maximale, le coefficient de pondération étant égal à sa valeur maximale lorsque l'indicateur de pertinence est compris entre 0 et une valeur déterminée inférieure à 1, le coefficient de pondération étant suivant une fonction décroissante de l'indicateur de pertinence lorsque l'indicateur de pertinence est compris entre la valeur déterminée et 1.

Selon une autre variante, une mise en œuvre du contrôle dudit système ACC en fonction de l'indicateur de pertinence est dépendante d'une appartenance du au moins un clignotant déclenché à un côté latéral déterminé du premier véhicule.

Selon un deuxième aspect, la présente invention concerne un dispositif de contrôle d'un système de régulation adaptative de vitesse de véhicule, le dispositif comprenant une mémoire associée à un processeur configuré pour la mise en œuvre des étapes du procédé selon le premier aspect de la présente invention.

Selon un troisième aspect, la présente invention concerne un véhicule, par exemple de type automobile, comprenant un dispositif tel que décrit ci-dessus selon le deuxième aspect de la présente invention.

Selon un quatrième aspect, la présente invention concerne un programme d'ordinateur qui comporte des instructions adaptées pour l'exécution des étapes du procédé selon le premier aspect de la présente invention, ceci notamment lorsque le programme d'ordinateur est exécuté par au moins un processeur.

Un tel programme d'ordinateur peut utiliser n'importe quel langage de programmation, et être sous la forme d'un code source, d'un code objet, ou d'un code intermédiaire entre un code source et un code objet, tel que dans une forme partiellement compilée, ou dans n'importe quelle autre forme souhaitable.

Selon un cinquième aspect non-revendiqué, la présente invention concerne un support d'enregistrement lisible par un ordinateur sur lequel est enregistré un programme d'ordinateur comprenant des instructions pour l'exécution des étapes du procédé selon le premier aspect de la présente invention.

D'une part, le support d'enregistrement peut être n'importe quel entité ou dispositif capable de stocker le programme. Par exemple, le support peut comporter un moyen de stockage, tel qu'une mémoire ROM, un CD-ROM ou une mémoire ROM de type circuit microélectronique, ou encore un moyen d'enregistrement magnétique ou un disque dur.

D'autre part, ce support d'enregistrement peut également être un support transmissible tel qu'un signal électrique ou optique, un tel signal pouvant être acheminé via un câble électrique ou optique, par radio classique ou hertzienne ou par faisceau laser autodirigé ou par d'autres moyens. Le programme d'ordinateur selon la présente invention peut être en particulier téléchargé sur un réseau de type Internet.

Alternativement, le support d'enregistrement peut être un circuit intégré dans lequel le programme d'ordinateur est incorporé, le circuit intégré étant adapté pour exécuter ou pour être utilisé dans l'exécution du procédé en question.

## Brève description des figures

D'autres caractéristiques et avantages de la présente invention ressortiront de la description des exemples de réalisation particuliers et non limitatifs de la présente invention ci-après, en référence aux figures 1 à 5 annexées, sur lesquelles :

[Fig. 1] illustre schématiquement un premier véhicule suivant un deuxième véhicule, selon un exemple de réalisation particulier et non limitatif de la présente invention ;

[Fig. 2] illustre schématiquement un indicateur de pertinence associé au deuxième véhicule de la figure 1, selon un exemple de réalisation particulier et non limitatif de la présente invention ;

[Fig. 3] illustre schématiquement un coefficient de pondération déterminé en fonction de l'indicateur de pertinence de la figure 2, selon un exemple de réalisation particulier et non limitatif de la présente invention ;

[Fig. 4] illustre schématiquement un dispositif configuré pour contrôler un système de régulation adaptative de vitesse du premier véhicule de la figure 1, selon un exemple de réalisation particulier et non limitatif de la présente invention ;

[Fig. 5] illustre un organigramme des différentes étapes d'un procédé de contrôle d'un système de régulation adaptative de vitesse du premier véhicule de la figure 1, selon un exemple de réalisation particulier et non limitatif de la présente invention.

## Description des exemples de réalisation

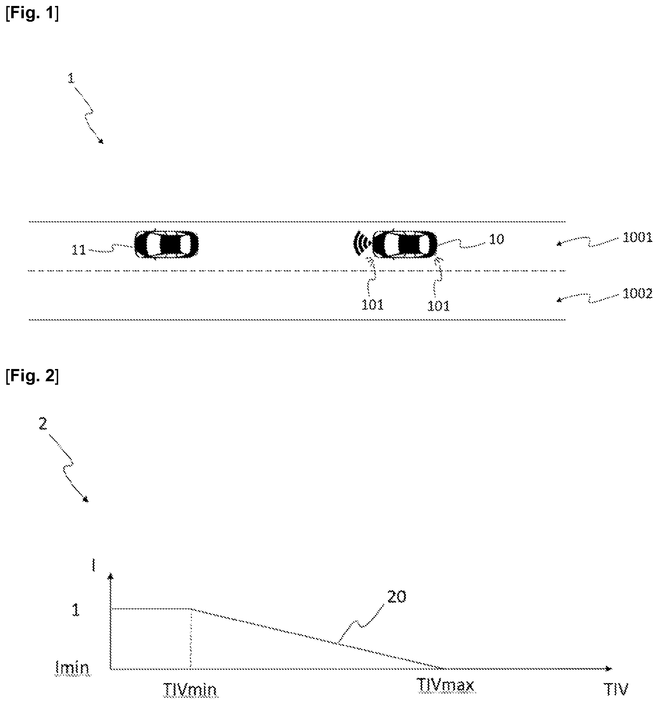

Un procédé et un dispositif de contrôle d'un système de régulation adaptative de vitesse d'un véhicule vont maintenant être décrits dans ce qui va suivre en référence conjointement aux figures 1 à 5. Des mêmes éléments sont identifiés avec des mêmes signes de référence tout au long de la description qui va suivre.

Selon un exemple particulier et non limitatif de réalisation de la présente invention, le contrôle d'un système de régulation adaptative de vitesse, dit système ACC, d'un premier véhicule ayant comme cible un deuxième véhicule circulant devant le premier véhicule comprend la détection du déclenchement d'un ou plusieurs clignotants du premier véhicule. Suivant cette détection, un indicateur de pertinence associé au deuxième véhicule est déterminé en fonction d'un temps inter-véhicules (dit TIV) courant entre le premier véhicule et le deuxième véhicule. Le système ACC du premier véhicule est alors contrôlé en fonction de cet indicateur de pertinence.

L'indicateur de pertinence correspond par exemple à un facteur ou une valeur représentant la probabilité que le deuxième véhicule reste le véhicule cible du système ACC à une échéance temporelle déterminée, par exemple à 1, 2, 3, 5 ou 10 secondes.

L'indicateur de pertinence représente également une probabilité que le deuxième véhicule reste dans la voie de circulation du premier véhicule ayant manifesté une intention de changer de voie par l'actionnement de clignotants.

La détection de l'actionnement des clignotants du premier véhicule permet de prendre en considération une intention de changement de voie de circulation dans le contrôle du système ACC. Le calcul d'un indicateur de pertinence associé au véhicule cible courant du système ACC du premier véhicule en fonction du TIV permet d'ajuster la régulation de la vitesse en prenant en considération à la fois la possibilité de changement de voie du premier véhicule et la distance entre le premier véhicule et le véhicule cible (correspondant au deuxième véhicule).

Cela permet par exemple de limiter une diminution de vitesse trop importante du premier véhicule si la distance entre le premier véhicule et le deuxième véhicule le permet, permettant un changement de voie du premier véhicule sans diminution inutile de vitesse avant le changement de voie.

Une telle adaptation de la régulation de la vitesse du premier véhicule diminue les freinages inutiles et trop importants, notamment lorsque la vitesse du véhicule cible (c'est-à-dire le deuxième véhicule) est inférieure à celle du premier véhicule et/ou de la vitesse de consigne du système ACC.

La figure 1 illustre schématiquement un premier véhicule 10 suivant un deuxième véhicule 11 sur une portion de route d'un environnement 1, selon un exemple de réalisation particulier et non limitatif de la présente invention.

La figure 1 illustre un premier véhicule 10, par exemple un véhicule automobile, embarquant un ou plusieurs capteurs configurés pour détecter la présence d'objets dans l'environnement 1 du premier véhicule 10. Selon d'autres exemples, le premier véhicule 10 correspond à un car, un bus, un camion, un véhicule utilitaire ou une motocyclette, c'est-à-dire à un véhicule de type véhicule terrestre motorisé.

Le premier véhicule 10 correspond à un véhicule circulant sous la supervision totale d'un conducteur ou circulant dans un mode autonome ou semi-autonome. Le premier véhicule circule selon un niveau d'autonomie égale à 0 ou selon un niveau d'autonomie allant de 1 à 5 par exemple, selon l'échelle définie par l'agence fédérale américaine qui a établi 5 niveaux d'autonomie allant de 1 à 5, le niveau 0 correspondant à un véhicule n'ayant aucune autonomie, dont la conduite est sous la supervision totale du conducteur, le niveau 1 correspondant à un véhicule avec un niveau d'autonomie minimal, dont la conduite est sous la supervision du conducteur avec une assistance minimale d'un système ADAS, et le niveau 5 correspondant à un véhicule complètement autonome.

Selon l'exemple de la figure 1, le premier véhicule 10 circule sur une portion de route à deux voies de circulations 1001, 1002. Le premier véhicule 10 circule par exemple sur la voie de circulation de droite 1001, les deux voies de circulation 1001 et 1002 étant selon un même sens de circulation. La voie de circulation de droite 1001 correspond par exemple à la voie de circulation considérée comme étant la plus lente et la voie de circulation de gauche 1002 correspond à la voie de circulation considérée comme étant la plus rapide.

Les notions de droite et de gauche sont définies selon le sens de circulation du premier véhicule 10. La voie de circulation « la plus lente » est à droite dans les pays où les véhicules circulent sur la voie de droite (pays tels que la France par exemple). La voie de circulation « la plus lente » est à gauche dans les pays où les véhicules circulent sur la voie de gauche (pays tels que le Royaume-Uni par exemple).

Selon l'exemple de la figure 1, le premier véhicule 10 suit un deuxième véhicule 11, à une distance déterminée et pouvant varier dans le temps (en fonction du comportement dynamique du premier véhicule 10 et du deuxième véhicule 11), le deuxième véhicule 11 circulant sur la même voie de circulation 1001 que le premier véhicule 10 et dans la même direction que le premier véhicule 10.

Le premier véhicule 10 embarque par exemple un ou plusieurs des capteurs suivants :

- un ou plusieurs radars à ondes millimétriques arrangés sur le premier véhicule 10, par exemple à l'avant, à l'arrière, sur chaque coin avant/arrière du véhicule ; chaque radar est adapté pour émettre des ondes électromagnétiques et pour recevoir les échos de ces ondes renvoyées par un ou plusieurs objets (par exemple le deuxième véhicule 11 situé devant le premier véhicule 10 selon l'exemple de la figure 1), dans le but de détecter des obstacles et leurs distances vis-à-vis du premier véhicule 10 ; et/ou

- un ou plusieurs LIDAR(s) (de l'anglais « Light Detection And Ranging », ou « Détection et estimation de la distance par la lumière » en français), un capteur LIDAR correspondant à un système optoélectronique composé d'un dispositif émetteur laser, d'un dispositif récepteur comprenant un collecteur de lumière (pour collecter la partie du rayonnement lumineux émis par l'émetteur et réfléchi par tout objet situé sur le trajet des rayons lumineux émis par l'émetteur) et d'un photodétecteur qui transforme la lumière collectée en signal électrique ; un capteur LIDAR permet ainsi de détecter la présence d'objets (par exemple le deuxième véhicule 11) situés dans le faisceau lumineux émis et de mesurer la distance entre le capteur et chaque objet détecté ; et/ou

- une ou plusieurs caméras (associées ou non à un capteur de profondeur) pour l'acquisition d'une ou plusieurs images de l'environnement autour du premier véhicule 10 se trouvant dans le champ de vision de la ou les caméras.

Les données obtenues de ce ou ces capteurs varient selon le type de capteur. Lorsqu'il s'agit d'un radar ou d'un LIDAR, les données correspondent par exemple à des données de distance entre des points de l'objet détecté et le capteur. Chaque objet détecté est ainsi représenté par un nuage de points (chaque point correspondant à un point de l'objet recevant le rayonnement émis par le capteur et réfléchissant au moins en partie ce rayonnement), le nuage de points représentant l'enveloppe (ou une partie de l'enveloppe) de l'objet détecté tel que vu par le capteur et in fine par le véhicule 10 embarquant le capteur. Lorsqu'il s'agit d'une caméra vidéo, les données correspondent à des données associées à chaque pixel de la ou les images acquises, par exemple des valeurs de niveaux de gris codés sur par exemple 8, 10, 12 ou plus de bits pour chaque canal couleur, par exemple RGB (de l'anglais « Red, Green, Blue » ou en français « Rouge, vert, bleu »). Ces données permettent par exemple de déterminer les positions successives prises par un objet se déplaçant dans l'environnement 1, par exemple le deuxième véhicule 11, et d'en déduire un ou plusieurs paramètres dynamiques de l'objet mobile tels que la vitesse et/ou l'accélération. Ces données permettent également de déterminer les lignes au sol pour par exemple participer à la détermination d'appartenance du deuxième véhicule 11 et du premier véhicule 10 à une même voie de circulation par exemple.

Les données acquises par le ou les capteurs embarqués alimentent par exemple un ou plusieurs systèmes d'aide à la conduite, dit ADAS (de l'anglais « Advanced Driver-Assistance System » ou en français « Système d'aide à la conduite avancé ») embarqués dans le premier véhicule 10. Un tel système ADAS est configuré pour assister, voire remplacer, le conducteur du premier véhicule 10 pour contrôler le premier véhicule 10 sur son parcours.

Selon un exemple, le premier véhicule 10 embarque un système ADAS correspondant à un système de régulation automatique de la vitesse, dit système ACC. Lorsque le système ACC est activé, le système ACC a pour objectif de réaliser une accélération de consigne, appelée $A_{consigne}(t)$, qui varie au cours du temps 't' et qui permet de maintenir ou atteindre une vitesse de régulation et/ou de maintenir une distance de sécurité déterminée vis-à-vis du deuxième véhicule 11 en amont du premier véhicule 10, c'est à dire d'un véhicule cible circulant devant le premier véhicule 10 dans le même sens de circulation sur la même voie de circulation. Les données obtenues du ou des capteurs embarqués dans le premier véhicule 10 permettent au système ACC du premier véhicule 10 d'établir une valeur cible d'accélération $A_{cible}(t)$ au cours du temps 't'. L'accélération cible $A_{cible}(t)$ devient une consigne d'accélération $A_{consigne}(t)$. Le système ACC ou un calculateur de ce système transmet par exemple les consignes d'accélérations $A_{consigne}(t)$ qu'il a déterminé au(x) calculateur(s) supervisant le fonctionnement d'un groupe motopropulseur du premier véhicule 10, notamment pour que ce(s) dernier(s) détermine(nt) les consignes de couple à générer par le groupe motopropulseur pour respecter les consignes d'accélération $A_{consigne}(t)$ et réguler la vitesse du premier véhicule 10.

Une valeur d'accélération cible est par exemple déterminée à un instant courant $t_0$ à partir d'un ensemble de données obtenues d'un ou plusieurs capteurs de détection d'objet embarqués dans le premier véhicule 10 et/ou de paramètres de consigne entrés par exemple par le conducteur ou déterminés à partir de données sur l'environnement du premier véhicule 10. La valeur d'accélération cible (exprimée en $m.s^{-2}$) est par exemple calculée à partir de :

- données représentatives du comportement dynamique du deuxième véhicule 11 (par exemple vitesse et/ou accélération), ces données étant par exemple obtenue à partir d'un ensemble de positions prises par le deuxième véhicule 11 sur un intervalle de temps précédant l'instant courant $t_0$ pour lequel est déterminée l'accélération cible. Les données sur les positions prises par le deuxième véhicule 11 sont avantageusement déterminées à partir des données reçues du ou des capteurs de détection d'objet embarqués dans le premier véhicule 10 ;
- données représentatives du comportement dynamique du premier véhicule 10 (par exemple vitesse, accélération, distance vis-à-vis du deuxième véhicule 11), ces données étant obtenues de capteurs embarqués dans le premier véhicule 10, la distance étant par exemple obtenue à partir des données reçues du ou des capteurs de détection d'objet ; et/ou
- paramètres de consignes fournis au système ACC, tels que par exemple une vitesse cible, une distance ou un temps inter-véhicule (DIV ou TIV) cible, ces paramètres étant enregistrés en mémoire, déterminés par analyse de l'environnement (par exemple la vitesse cible est déterminée par lecture des panneaux de limitation de vitesse ou à partir de données reçus d'un système de navigation) ou entrés par un utilisateur via une interface Homme-Machine, dite IHM.

Un processus de contrôle du système ACC du premier véhicule 10 ayant pour véhicule cible le deuxième véhicule 11 est avantageusement mis en œuvre par le premier véhicule 10, c'est-à-dire par un calculateur ou une combinaison de calculateurs du système embarqué du premier véhicule 10, par exemple par le ou les calculateurs en charge de contrôler le système ACC.

Dans une première opération, le déclenchement d'un ou plusieurs clignotants latéraux, par exemple les clignotants gauches 101 du premier véhicule 10, est détecté ou une information représentative du déclenchement des clignotants est reçue par le calculateur en charge du processus.

Un feu clignotant (aussi appelé clignotant) correspond avantageusement à un éclairage utilisé pour indiquer ou signaler un changement de direction (par exemple vers la droite (respectivement vers la gauche) lorsque le ou les feux clignotants droit (respectivement gauche) sont activés).

L'éclairage d'un feu clignotant est généralement de couleur orange et un feu clignotant, lorsqu'il est activé, émet de la lumière de manière discontinue. La fréquence des clignotements est par exemple comprise entre 60 et 120 clignotements par minute, par exemple 90 clignotements par minute.

Le déclenchement des clignotants gauches 101 du premier véhicule 10 est ainsi représentatif d'une intention du premier véhicule 10 (par exemple de son conducteur) de changer de voie de circulation pour passer sur la voie de circulation 1002 située à gauche de la voie de circulation courante 1001 du premier véhicule 10.

Les feux clignotants du premier véhicule 10 sont avantageusement contrôlés par un ou plusieurs calculateurs du système embarqué du premier véhicule 10. Le système embarqué du premier véhicule 10 comprend un ensemble de calculateurs reliés entre eux par un ou plusieurs bus de communication. Ces calculateurs forment par exemple une architecture multiplexée pour la réalisation de différents services utiles pour le bon fonctionnement du premier véhicule 10 et pour assister le conducteur et/ou les passagers du véhicule dans le contrôle du premier véhicule 10, par exemple en contrôlant le système ACC et/ou l'activation et la désactivations de chacun des feux clignotants du véhicule en fonction de signaux de commande reçus d'organes de commande arrangés par exemple dans l'habitacle du premier véhicule 10, ces signaux de commande circulant sur l'architecture multiplexée. Les calculateurs échangent des données entre eux par l'intermédiaire d'un ou plusieurs bus informatiques, par exemple un bus de communication de type bus de données CAN (de l'anglais « Controller Area Network » ou en français « Réseau de contrôleurs »), CAN FD (de l'anglais « Controller Area Network Flexible Data-Rate » ou en français « Réseau de contrôleurs à débit de données flexible »), FlexRay (selon la norme ISO 17458) ou Ethernet (selon la norme ISO/IEC 802-3).

La détection de l'activation des clignotants 1001 est ainsi par exemple obtenue par la réception d'une information filaire de type binaire acquise par le calculateur ou le boitier de servitude intelligent, dit BSI, du premier véhicule 10 lorsque cette information est transmise sur le réseau filaire, par exemple le bus de données, du système embarqué du premier véhicule 10. Une telle information correspond à une valeur binaire prenant une première valeur lorsque les clignotants sont actifs ou activés et une deuxième valeur lorsque les clignotants sont inactifs ou désactivés. Une telle information est par exemple transmise par le BSI au calculateur en charge du processus via le bus de données reliant ces deux calculateurs.

Dans une deuxième opération, un indicateur de pertinence associé au véhicule cible du système ACC, c'est-à-dire le deuxième véhicule 11 selon l'exemple de la figure 1, est déterminé suivant la détection du déclenchement des clignotants 101 en fonction d'un temps inter-véhicules courant (TIV) entre le premier véhicule 10 et le deuxième véhicule 11.

Le TIV correspond par exemple à la distance inter-véhicules (DIV, par exemple déterminée par un ou plusieurs capteurs embarqués dans le premier véhicule 10) entre le premier véhicule 10 et le deuxième véhicule 11 divisée par la valeur absolue de la différence entre la vitesse courante du premier véhicule 10 et la vitesse courante du deuxième véhicule 11.

L'indicateur de pertinence est par exemple déterminé selon une loi ou une fonction déterminée, par exemple enregistrée en mémoire du calculateur mettant en œuvre le processus.

La figure 2 illustre un exemple d'une telle fonction 20 entre l'indicateur de pertinence (noté I en ordonné du diagramme 2) et le TIV (en abscisse du diagramme).

L'indicateur de pertinence correspond par exemple à une valeur comprise entre 0 et 1 ou à une valeur comprise entre une valeur minimale et une valeur maximale, la valeur minimale étant par exemple égale à 0.3, 0.4, 0.5 ou 0.6 et la valeur maximale étant par exemple égale à 0.9 ou 1.

Selon l'exemple de la figure 2, l'indicateur de pertinence prend une valeur maximale égale à 1 et une valeur minimale égale à 0.5.

La fonction entre l'indicateur de pertinence I et le TIV selon l'exemple de la figure 2 comprend :

- une première partie selon laquelle I est constant et vaut 1 pour un TIV compris entre 0 et une valeur minimale de TIV (notée TIVmin), par exemple égale à 3 secondes ;
- une deuxième partie selon laquelle I décroit au fur et à mesure que TIV augmente, I décroissant selon une fonction linéaire pour passer du maximum égal à 1 au minimum égal à 0.5 entre TIVmin et une valeur maximale de TIV (notée TIVmax), par exemple égale à 6 secondes.

Ainsi et de manière globale, plus le TIV courant augmente, plus l'indicateur de pertinence diminue.

Selon un autre exemple, l'indicateur de pertinence est déterminé en prenant en outre en considération une pertinence de base du véhicule cible déterminée lorsque le système ACC du premier véhicule 10 détermine ou sélectionne le deuxième véhicule 11 comme véhicule cible.

La pertinence de base prend par exemple la valeur 1 par défaut lorsque le système ACC sélectionne un véhicule comme véhicule cible, la pertinence de base associée à ce véhicule étant égale à 0 tant que ce véhicule n'a pas été sélectionné comme véhicule cible.

Selon une variante, la valeur de la pertinence de base dépend par exemple d'un indicateur de fiabilité associé à la détection du véhicule sélectionné comme étant le véhicule cible, la pertinence de base variant alors entre une valeur minimale (par exemple égale à 0.5, 0.6 ou 0.7) et une valeur maximale par exemple égale à 1.

Selon cet autre exemple, l'indicateur de pertinence final utilisé dans la suite du processus est déterminé ou calculé selon l'équation suivante :

$$I_{final} = I_{base} - (1 - I)$$

Avec $I_{final}$ l'indicateur de pertinence final, $I_{base}$ l'indicateur de pertinence de base et $I$ un indicateur déterminé selon la fonction décrite ci-dessus en regard de la figure 2. La valeur de $I_{final}$ est par exemple saturée ou bornée entre 0 et 1.

Dans une troisième opération, le système ACC du premier véhicule 10 est contrôlé en fonction de l'indicateur de pertinence $I$ ou $I_{final}$.

Le contrôle du système ACC comprend avantageusement un ajustement d'une valeur ou d'un paramètre de consigne du système en fonction de l'indicateur de pertinence. Par exemple, le temps inter-véhicules fourni en consigne ($TIV_{consigne}$) ou comme cible ($TIV_{cible}$) est ajusté en fonction de l'indicateur de pertinence.

Par exemple, la valeur cible ou de consigne du TIV est choisie par le conducteur parmi un ensemble de valeurs, par exemple parmi un ensemble comprenant une valeur haute (par exemple égale à 2 s), une valeur intermédiaire (par exemple égale à 1.5 s) et une valeur basse (par exemple égale à 1 s).

La valeur cible ou de consigne est par exemple ajustée de manière à être :

- maintenue lorsque l'indicateur de pertinence prend sa valeur maximale ; et
- réduite au fur et à mesure que l'indicateur de pertinence diminue, la réduction du TIV de consigne ou cible étant par exemple limitée à une valeur minimale.

L'ajustement de la valeur cible ou de consigne du TIV est par exemple obtenue en ajustant la vitesse courante du deuxième véhicule 11 (par exemple déterminée par le premier véhicule 10 à partir des données obtenues du ou des capteurs de détection d'objet embarqués). La vitesse ajustée $V_{ajust}$ du deuxième véhicule est par exemple déterminée en fonction de la vitesse courante $V_{courante}$ du deuxième véhicule 11 et d'une différence entre une vitesse de consigne $V_{consigne}$ du système ACC et la vitesse courante $V_{courante}$, la différence étant pondérée d'un coefficient de pondération, noté k, lequel est fonction de l'indicateur de pertinence $I$ ou $I_{final}$.

La vitesse ajustée $V_{ajust}$ du deuxième véhicule 11 est par exemple obtenue par l'équation suivante :

$$V_{ajust} = V_{courante} + k*(V_{consigne} - V_{courante})$$

Selon cet exemple, l'indicateur de pertinence permet de moduler ou d'ajuster la vitesse du véhicule cible utilisée en entrée du contrôleur longitudinal du système ACC pour faire en sorte que le premier véhicule 10 freine moins (pour éviter une collision avec le deuxième véhicule ou pour respecter le TIV cible ou de consigne), notamment lorsque le premier véhicule 10 est suffisamment éloigné du deuxième véhicule 11.

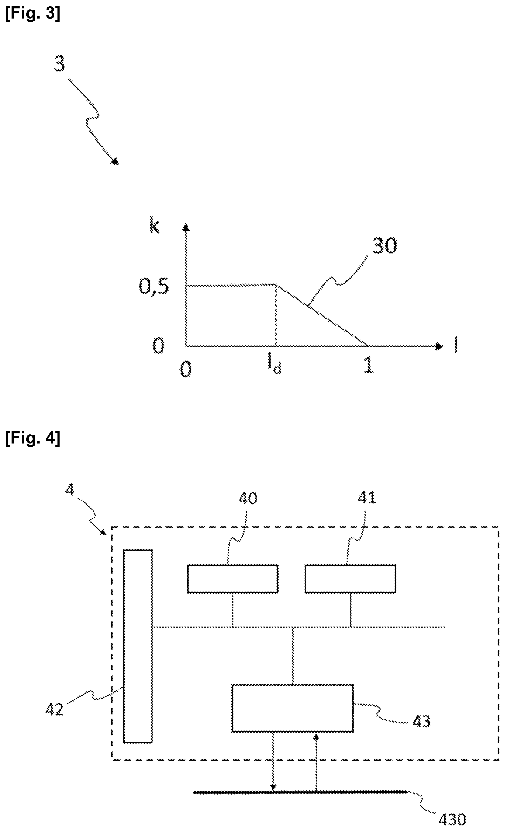

La figure 3 illustre un exemple de relation entre le coefficient de pondération k (correspondant à l'axe des ordonnées du diagramme 3) et l'indicateur de pertinence I (correspondant à l'axe des abscisses du diagramme 3), une fonction 30 reliant ces deux grandeurs.

Selon l'exemple de la figure 3, le coefficient de pondération k est par exemple compris entre 0 et une valeur maximale (par exemple égale à 0.5 ou à 0.6), le coefficient de pondération k étant égal à sa valeur maximale lorsque l'indicateur de pertinence I est compris entre 0 et une valeur déterminée (notée $I_d$) inférieure à 1, le coefficient de pondération étant suivant une fonction décroissante de l'indicateur de pertinence I lorsque l'indicateur de pertinence est compris entre la valeur déterminée $I_d$ et 1

Un tel processus permet ainsi d'éviter un freinage trop important du premier véhicule 10 déclenché par le système ACC lorsque les clignotants du premier véhicule 10 ont été activés, notamment lorsque le premier véhicule 10 est à une distance jugée importante (supérieure à un seuil) du deuxième véhicule 11.

La régulation du système ACC est d'autant plus modifiée (vis-à-vis d'un mode de fonctionnement normal lorsqu'aucune activation des clignotants du premier véhicule 10 n'a été détectée) que le premier véhicule 10 est loin du deuxième véhicule 11. Dit autrement, la régulation du système ACC est d'autant plus modifiée (vis-à-vis d'un mode de fonctionnement normal lorsqu'aucune activation des clignotants du premier véhicule 10 n'a été détectée) que le TIV courant est élevé, avec une borne inférieure et une borne supérieure pour limiter l'ajustement.

Selon une variante optionnelle de réalisation, l'ajustement de la régulation n'est mise en œuvre que lorsque la détection de l'activation ou du déclenchement des clignotants correspond à la détection des clignotants d'un côté latéral déterminé du premier véhicule 10.

Par exemple, la deuxième opération et la troisième opération ne sont mises en œuvre que lorsque les clignotants activés indiquent un changement de voie vers une voie « plus rapide » (c'est-à-dire vers une voie à gauche de la voie courante dans les pays où les véhicules circulent à droite et vers une voie à droite de la voie courante dans les pays où les véhicules circulent à gauche).

La figure 4 illustre schématiquement un dispositif 4 configuré pour contrôler le système ACC d'un véhicule, par exemple du premier véhicule 10, selon un exemple de réalisation particulier et non limitatif de la présente invention. Le dispositif 4 correspond par exemple à un dispositif embarqué dans le premier véhicule 10, par exemple un calculateur.

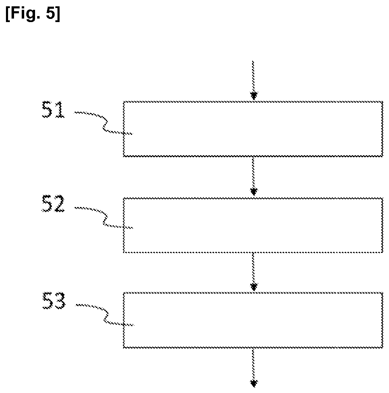

Le dispositif 4 est par exemple configuré pour la mise en œuvre des opérations décrites en regard des figures 1 à 3 et/ou des étapes du procédé décrit en regard de la figure 5. Des exemples d'un tel dispositif 4 comprennent, sans y être limités, un équipement électronique embarqué tel qu'un ordinateur de bord d'un véhicule, un calculateur électronique tel qu'une UCE (« Unité de Commande Electronique »), un téléphone intelligent, une tablette, un ordinateur portable. Les éléments du dispositif 4, individuellement ou en combinaison, peuvent être intégrés dans un unique circuit intégré, dans plusieurs circuits intégrés, et/ou dans des composants discrets. Le dispositif 4 peut être réalisé sous la forme de circuits électroniques ou de modules logiciels (ou informatiques) ou encore d'une combinaison de circuits électroniques et de modules logiciels.

Le dispositif 4 comprend un (ou plusieurs) processeur(s) 40 configurés pour exécuter des instructions pour la réalisation des étapes du procédé et/ou pour l'exécution des instructions du ou des logiciels embarqués dans le dispositif 4. Le processeur 40 peut inclure de la mémoire intégrée, une interface d'entrée/sortie, et différents circuits connus de l'homme du métier. Le dispositif 4 comprend en outre au moins une mémoire 41 correspondant par exemple à une mémoire volatile et/ou non volatile et/ou comprend un dispositif de stockage mémoire qui peut comprendre de la mémoire volatile et/ou non volatile, telle que EEPROM, ROM, PROM, RAM, DRAM, SRAM, flash, disque magnétique ou optique.

Le code informatique du ou des logiciels embarqués comprenant les instructions à charger et exécuter par le processeur est par exemple stocké sur la mémoire 41.

Selon différents exemples de réalisation particuliers et non limitatifs, le dispositif 4 est couplé en communication avec d'autres dispositifs ou systèmes similaires (par exemple d'autres calculateurs) et/ou avec des dispositifs de communication, par exemple une TCU (de l'anglais « Telematic Control Unit » ou en français « Unité de Contrôle Télématique »), par exemple par l'intermédiaire d'un bus de communication ou au travers de ports d'entrée / sortie dédiés.

Selon un exemple de réalisation particulier et non limitatif, le dispositif 4 comprend un bloc 42 d'éléments d'interface pour communiquer avec des dispositifs externes. Les éléments d'interface du bloc 42 comprennent une ou plusieurs des interfaces suivantes :

- interface radiofréquence RF, par exemple de type Wi-Fi® (selon IEEE 802.11), par exemple dans les bandes de fréquence à 2,4 ou 5 GHz, ou de type Bluetooth® (selon IEEE 802.15.1), dans la bande de fréquence à 2,4 GHz, ou de type Sigfox utilisant une technologie radio UBN (de l'anglais Ultra Narrow Band, en français bande ultra étroite), ou LoRa dans la bande de fréquence 868 MHz, LTE, (de l'anglais « Long-Term Evolution » ou en français « Evolution à long terme »), LTE-Advanced (ou en français LTE-avancé) ;
- interface USB (de l'anglais « Universal Serial Bus » ou « Bus Universel en Série » en français) ;
- interface HDMI (de l'anglais « High Definition Multimedia Interface », ou « Interface Multimedia Haute Definition » en français) ;
- interface LIN (de l'anglais « Local Interconnect Network », ou en français « Réseau interconnecté local »).

Des données sont par exemples chargées vers le dispositif 4 via l'interface du bloc 42 en utilisant un réseau Wi-Fi® tel que selon IEEE 802.11, un réseau ITS G5 basé sur IEEE 802.11p ou un réseau mobile tel qu'un réseau 4G (ou 5G) basé sur la norme LTE (de l'anglais Long Term Evolution) définie par le consortium 3GPP notamment un réseau LTE-V2X.

Selon un autre exemple de réalisation particulier et non limitatif, le dispositif 4 comprend une interface de communication 43 qui permet d'établir une communication avec d'autres dispositifs (tels que d'autres calculateurs du système embarqué) via un canal de communication 430. L'interface de communication 43 correspond par exemple à un transmetteur configuré pour transmettre et recevoir des informations et/ou des données via le canal de communication 430. L'interface de communication 43 correspond par exemple à un réseau filaire de type CAN (de l'anglais « Controller Area Network » ou en français « Réseau de contrôleurs »), CAN FD (de l'anglais « Controller Area Network Flexible Data-Rate » ou en français « Réseau de contrôleurs à débit de données flexible »), FlexRay (standardisé par la norme ISO 17458) ou Ethernet (standardisé par la norme ISO/IEC 802-3).

Selon un exemple de réalisation particulier et non limitatif, le dispositif 4 peut fournir des signaux de sortie à un ou plusieurs dispositifs externes, tels qu'un écran d'affichage, tactile ou non, un ou des haut-parleurs et/ou d'autres périphériques (système de projection) via des interfaces de sortie respectives. Selon une variante, l'un ou l'autre des dispositifs externes est intégré au dispositif 4.

[Fig. 5] illustre un organigramme des différentes étapes d'un procédé de contrôle d'un système ACC d'un véhicule, par exemple du premier véhicule 10, selon un exemple de réalisation particulier et non limitatif de la présente invention. Le procédé est par exemple mis en œuvre par un dispositif embarqué dans le premier véhicule 10 ou par le dispositif 4 de la figure 4.

Dans une première étape 51, le déclenchement d'au moins un clignotant du premier véhicule est détecté.

Dans une deuxième étape 52, un indicateur de pertinence d'un deuxième véhicule correspondant à un véhicule cible du système ACC est déterminé suite à la détection du déclenchement du au moins un clignotant, l'indicateur de pertinence étant déterminé en fonction d'un temps inter-véhicules courant entre le premier véhicule et le deuxième véhicule.

Dans une troisième étape 53, le système ACC est contrôlé en fonction de l'indicateur de pertinence.

Selon une variante, les variantes et exemples des opérations décrits en relation avec la figure 1, 2 et/ou 3 s'appliquent aux étapes du procédé de la figure 5.

Bien entendu, la présente invention ne se limite pas aux exemples de réalisation décrits ci-avant mais s'étend à un procédé de contrôle d'un véhicule, par exemple un véhicule autonome, qui inclurait des étapes secondaires sans pour cela sortir de la portée de la présente invention définie par les revendications. Il en serait de même d'un dispositif configuré pour la mise en œuvre d'un tel procédé.

La présente invention concerne également un système de régulation adaptative de vitesse pour véhicule comprenant le dispositif 4 de la figure 4.

La présente invention concerne également un véhicule, par exemple automobile ou plus généralement un véhicule autonome à moteur terrestre, comprenant le dispositif 4 de la figure 4 ou le système de régulation adaptative de vitesse pour véhicule ci-dessus.

## Revendications

1. Procédé de contrôle d'un système de régulation adaptative de vitesse, dit système ACC, d'un premier véhicule (10), ledit procédé comprenant les étapes suivantes :

   - détection (51) d'un déclenchement d'au moins un clignotant (101) dudit premier véhicule (10) ;
   - détermination d'un indicateur de pertinence d'un deuxième véhicule (11) correspondant à un véhicule cible dudit système ACC à la détection dudit déclenchement du au moins un clignotant (101) en fonction d'un temps inter-véhicules courant entre ledit premier véhicule (10) et ledit deuxième véhicule (11) ;
   - contrôle (53) dudit système ACC en fonction dudit indicateur de pertinence ;

   ledit procédé étant **caractérisé en ce que** ledit contrôle (53) dudit système ACC comprend un ajustement d'une valeur de temps inter-véhicules de consigne en fonction dudit indicateur de pertinence, ledit ajustement de la valeur de temps inter-véhicules de consigne étant obtenu en déterminant une vitesse ajustée dudit deuxième véhicule (11), ladite vitesse ajustée étant déterminée en fonction d'une vitesse courante dudit deuxième véhicule (11) et d'une différence entre une vitesse de consigne dudit système ACC et ladite vitesse courante, ladite différence étant pondérée d'un coefficient de pondération fonction dudit indicateur de pertinence.

2. Procédé selon la revendication 1, pour lequel ledit indicateur de pertinence prend une valeur minimale déterminée pour une valeur maximale déterminée dudit temps inter-véhicules courant et ledit indicateur de pertinence prend une valeur maximale déterminée pour une valeur minimale déterminée dudit temps inter-véhicules courant.

3. Procédé selon la revendication 2, pour lequel ladite valeur minimale déterminée dudit indicateur de pertinence est égale à 0.5, ladite valeur maximale déterminée dudit temps inter-véhicules courant est égale à 6 s, ladite valeur maximale déterminée dudit indicateur de pertinence est égale à 1 et ladite valeur minimale déterminée dudit temps inter-véhicules courant est égale à 3 s.

4. Procédé selon l'une des revendications 1 à 3, pour lequel, ledit indicateur de pertinence étant compris entre 0 et 1, ledit coefficient de pondération étant compris entre 0 et une valeur maximale, ledit coefficient de pondération étant égal à sa valeur maximale lorsque ledit indicateur de pertinence est compris entre 0 et une valeur déterminée inférieure à 1, ledit coefficient de pondération étant suivant une fonction décroissante dudit indicateur de pertinence lorsque ledit indicateur de pertinence est compris entre ladite valeur déterminée et 1.

5. Procédé selon l'une des revendications 1 à 4, pour lequel une mise en œuvre dudit contrôle dudit système ACC en fonction dudit indicateur de pertinence est dépendante d'une appartenance dudit au moins un clignotant (101) déclenché à un côté latéral déterminé dudit premier véhicule (10).

6. Programme d'ordinateur comportant des instructions pour la mise en œuvre du procédé selon l'une quelconque des revendications précédentes, lorsque ces instructions sont exécutées par un processeur.

7. Dispositif (4) de contrôle d'un système de régulation adaptative de vitesse de véhicule, ledit dispositif (4) comprenant une mémoire (41) associée à au moins un processeur (40) configuré pour la mise en œuvre des étapes du procédé selon l'une quelconque des revendications 1 à 5.

8. Véhicule (10) comprenant le dispositif (4) selon la revendication 7.

**Patentansprüche**

1. Verfahren zum Steuern eines adaptiven Geschwindigkeitsregelungssystems, ACC-System, eines ersten Fahrzeugs (10), wobei das Verfahren die folgenden Schritte umfasst:

- Detektieren (51) eines Auslösens mindestens eines Blinkers (101) des ersten Fahrzeugs (10);
- Bestimmen eines Relevanzindikators eines zweiten Fahrzeugs (11), der einem Zielfahrzeug des ACC-Systems entspricht, zum Detektieren des Auslösens des mindestens einen Blinkers (101) in Abhängigkeit von einer zwischen dem ersten Fahrzeug (10) und dem zweiten Fahrzeug laufenden Zeit zwischen Fahrzeugen (11);
- Steuerung (53) des ACC-Systems in Abhängigkeit von dem Relevanzindikator; wobei das Verfahren **dadurch gekennzeichnet ist, dass** die Steuerung (53) des ACC-Systems eine Einstellung eines Soll-Interfahrzeug-Zeitwertes in Abhängigkeit von dem Relevanzindikator umfasst, wobei die Einstellung des Soll-Interfahrzeug-Zeitwertes durch Bestimmen einer angepassten Geschwindigkeit des zweiten Fahrzeugs (11) erhalten wird, wobei die angepasste Geschwindigkeit in Abhängigkeit von einer aktuellen Geschwindigkeit des zweiten Fahrzeugs (11) und einer Differenz zwischen einer Soll-Geschwindigkeit des ACC-Systems und der aktuellen Geschwindigkeit bestimmt wird, wobei die Differenz mit einem Gewichtungsfaktor gewichtet wird Relevanzindikator.

2. Verfahren nach Anspruch 1, bei dem der Relevanzindikator einen bestimmten Minimalwert für einen bestimmten Maximalwert der aktuellen Interfahrzeug-Zeit annimmt und der Relevanzindikator einen bestimmten Maximalwert für einen bestimmten Minimalwert der aktuellen Interfahrzeug-Zeit annimmt.

3. Verfahren nach Anspruch 2, bei dem der bestimmte Minimalwert des Relevanzindikators 0,5 beträgt, der bestimmte Maximalwert der aktuellen Interfahrzeug-Zeit 6 s beträgt, der bestimmte Maximalwert des Relevanzindikators 1 beträgt und der bestimmte Minimalwert der aktuellen Interfahrzeug-Zeit 3 s beträgt.

4. Verfahren nach einem der Ansprüche 1 bis 3, bei dem der Relevanzindikator zwischen 0 und 1 liegt, der Gewichtungskoeffizient zwischen 0 und einem Maximalwert liegt, der Gewichtungskoeffizient gleich seinem Maximalwert ist, wenn der Relevanzindikator zwischen 0 und einem bestimmten Wert kleiner als 1 liegt, wobei der Gewichtungskoeffizient einer abnehmenden Funktion des Relevanzindikators folgt, wenn der Relevanzindikator zwischen dem bestimmten Wert und 1 liegt.

5. Verfahren nach einem der Ansprüche 1 bis 4, bei dem die Durchführung der Kontrolle des ACC-Systems in Abhängigkeit von dem Relevanzindikator von einer Zugehörigkeit des mindestens einen Blinkers (101) abhängt, der an einer bestimmten Seitenseite des ersten Fahrzeugs (10) ausgelöst wird.

6. Computerprogramm mit Anweisungen zur Durchführung des Verfahrens nach einem der vorhergehenden Ansprüche, wenn diese Anweisungen von einem Prozessor ausgeführt werden.

7. Vorrichtung (4) zur Steuerung eines adaptiven Fahrzeuggeschwindigkeitsregelsystems, wobei die Vorrichtung (4) einen Speicher (41) umfasst, der mit mindestens einem Prozessor (40) verbunden ist, der zur Durchführung der Schritte des Verfahrens nach einem der Ansprüche 1 bis 5 konfiguriert ist.

8. Fahrzeug (10) mit der Vorrichtung (4) nach Anspruch 7.

**Claims**

1. Method for controlling an adaptive speed regulation system, referred to as an ACC system, of a first vehicle (10), said method comprising the steps of:

- detecting (51) a triggering of at least one indicator (101) of said first vehicle (10);
- determining a relevance indicator of a second vehicle (11) corresponding to a target vehicle of said ACC system on detecting said triggering of at least one indicator (101) as a function of an inter-vehicle current time between said first vehicle (10) and said second vehicle (11);
- controlling (53) said ACC system as a function of said relevance indicator;

said method being **characterised in that** said control (53) of said ACC system comprises an adjustment of an inter-vehicle reference time value as a function of said inter-vehicle relevance indicator being obtained by determining an adjusted speed of said second vehicle (11), said adjusted speed being determined as a function of a current speed of said second vehicle (11) and of a difference between a setpoint speed of said ACC system and said current speed, said difference being weighted by a coefficient of balance as a function of said relevance indicator.

2. Method according to claim 1, wherein said relevance indicator takes a determined minimum value for a determined maximum value of said inter-vehicle current time and said relevance indicator takes a determined maximum value for a determined minimum value of said inter-vehicle current time.

3. Method according to claim 2, wherein said determined minimum value of said relevance indicator is equal to 0.5, said determined maximum value of said inter-vehicle current time is equal to 6 s, said determined maximum value of said relevance indicator is equal to 1 and said determined minimum value of said inter-vehicle current time is equal to 3 s.

4. Method according to one of claims 1 to 3, for which, said relevance indicator being between 0 and 1, said balance coefficient being between 0 and a maximum value, said balance coefficient being equal to its maximum value when said relevance indicator is between 0 and a determined value less than 1, said balance coefficient being according to a decreasing function of said relevance indicator when said relevance indicator is between said determined value and 1.

5. Method according to one of claims 1 to 4, for which an implementation of said control of said ACC system as a function of said relevance indicator is dependent on a belonging of said at least one flasher (101) activated at a determined lateral side of said first vehicle (10).

6. Computer plan comprising instructions for the implementation of the method according to any one of the previous claims, when these instructions are executed by a processor.

7. Device (4) for controlling an adaptive vehicle speed regulation system, said device (4) comprising a memory (41) associated with at least one processor (40) configured for implementing the steps of the method according to any one of claims 1 to 5.

8. Vehicle (10) comprising the device (4) according to claim 7.

**[Fig. 1]**

**[Fig. 2]**

[Fig. 3]

[Fig. 4]

[Fig. 5]

## RÉFÉRENCES CITÉES DANS LA DESCRIPTION

**Documents brevets cités dans la description**

- FR 2111168

- DE 102015214573 A1